# EUROPEAN PATENT APPLICATION

(11) **EP 4 657 871 A1**
(43) Date of publication of application: **03.12.2025**
(21) Application number: 25175434.7
(22) Date of filing: 09.05.2025
(51) Int. Cl.: H04N 23/67, H04N 23/61, H04N 23/667, H04N 23/959

(54) **MULTI-MODAL SENSOR FUSION FOR CAMERA FOCUS ADJUSTMENTS**

(30) Priority: 30.05.2024 US 202463653459 P; 25.04.2025 US 202519189449
(71) Applicant: Apple Inc., Cupertino, CA 95014 (US)
(72) Inventor: PIUZE-PHANEUF, Emmanuel, Cupertino, CA, 95014 (US); PILLANS, Luke A., Cupertino, CA, 95014 (US); MIRHOSSEINI, Seyedkoosha, Cupertino, CA, 95014 (US); MOORE, Christian I., Cupertino, CA, 95014 (US); FORTIN-DESCHÊNES, Simon, Cupertino, CA, 95014 (US)
(74) Representative: Lang, Johannes

(57) **Abstract**

Systems and methods for adjusting camera focus so that objects of interest (e.g., to the image viewer) or objects being attended to (e.g., what the image viewer is attentive to) in the captured camera images are more likely to be in focus in captured images. Information from various sources (e.g., multiple sensors providing information about the user and/or environment) may be fused, e.g., combined or accounted for collectively, to determine how to adjust camera focus in a way that corresponds to viewer interests and/or attention. This may involve determining a fusion characteristic that specifies how to fuse the multiple signals to determine focus adjustments, e.g., selecting or configuring a multi-modal optimization and/or a smoothing function. The fusion characteristic may account for signal confidence. The fusion characteristic may correspond to a determined operational mode used to determine which signals will be used and how the signals will be combined.

## Description

### TECHNICAL FIELD

The present disclosure generally relates to electronic devices, and in particular, to systems, methods, and devices for adjusting the camera focus of cameras on electronic devices based on determining the attention or interests of users of those devices.

### BACKGROUND

Various techniques are used to automatically adjust camera focus used by cameras. Since the scenes captured in camera images often include objects at various depths (i.e., different distances away from the camera's viewpoint), such techniques may adjust the focus of a camera in a way that captures objects at certain depths better (e.g., more clearly) than other objects at other depths. Existing techniques may be improved with respect to adjusting focus in ways that account for the attention or interests of the viewers of the captured images.

### SUMMARY

Some implementations disclosed herein provide systems and methods for adjusting camera focus so that objects of interest (e.g., to the image viewer) or objects being attended to (e.g., what the image viewer is attentive to) in the captured camera images are more likely to be in focus in captured images. Some implementations use information from various sources (e.g., multiple sensors providing information about the user and/or environment and/or information about virtual content that added to the captured images) to determine how to adjust camera focus in a way that corresponds to viewer interests and/or attention. This may involve adjusting the focus of a camera using multiple sensor-based distance signals indicative of appropriate focus depths, e.g., corresponding to what the user is looking at, what object the user is scanning/3D modeling, etc. The signals may include, as examples, a vergence distance that is determined based on eye tracking using eye sensors, distances of one or more objects (real/virtual) that are close to the user's gaze as determined based on environment depth or image sensors and eye tracking using eye sensors, a distance to a hand (e.g., when user is looking at the hand) determined based on hand detection using depth/image sensors, etc.

In some implementations, the information from multiple sources is fused, e.g., combined or accounted for collectively, in determining how to adjust camera focus. This may involve determining a fusion characteristic that specifies or is otherwise used to determine how to fuse the multiple signals to determine focus adjustments, e.g., selecting or configuring a multi-modal optimization and/or a smoothing function to determine an appropriate camera focus adjustment. The fusion characteristic may account for signal confidence of different signal types and/or how different signals may vary in different contexts (e.g., vergence confidence decreases with distance), etc. The fusion characteristic may be a determined operational mode (e.g., nominal, VR, spatial photo capture, spatial video capture, persona enrollment, APE calibration, in-field calibration, object capture, fallback, etc.) used to determine which signals will be used and how the signals will be combined. APE calibration may involve an adaptive PFL estimator and provide a mode to calibrate how the lens position maps to a peak focus distance.

Some implementations disclosed herein are implemented via one or more processors executing stored instructions to perform a method. The method may be performed at an electronic device (e.g., such as a head-mounted device (HMD) or mobile device) having a processor, a display, and one or more sensors. The method may obtain a plurality of sensor-based distance signals based on sensor data from a plurality of sensors. The plurality of sensors may include one or more eye sensors (e.g., inward facing sensors on an HMD that capture eye/eye area characteristics), one or more environment sensors (e.g., outward facing sensors on an HMD capturing images of a user's room, hands, body, face, etc.), and/or or other sensor data such as (e.g., motion sensors that track device position and orientation). The method may determine a fusion characteristic based on the sensor data. In one example, this involves determining a context, determining confidence in one or more of the signals based on the context, and then a fusion characteristic that accounts for the confidence. In another example, this involves determining an operational mode and then a fusion characteristic based on the operational mode. The method may further involve determining a focus adjustment of at least one of the one or more sensors (e.g., an outward facing camera) based on fusing the sensor-based distance signals using the fusion characteristic) and adjusting the focus of the at least one of the one or more sensors based on the focus adjustment.

Captured images, e.g., from the focus-adjusted camera, may be displayed to a user in real time, e.g., at or near the time at which the images are captured. For example, an HMD may present a view that is at least partially based on passthrough video images of an environment around the HMD, and the focus of those images may be adjusted in real time as the user looks at the views, taking into account information about user interest or attentiveness to portions of the views.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 is an example of a device used within a physical environment in accordance with some implementations.
Figures 2A and 2B illustrate example views provided by the device of Figure 1, the views including a left eye view and a right eye view, in accordance with some implementations.
Figure 2C illustrates determining a vergence-based distance in accordance with some implementations.
Figure 3 illustrates a system flow diagram of an exemplary focus adjustment process in accordance with some implementations.
Figures 4A and 4B illustrate example views provided by the device of Figure 1 with adjusted focus of a camera, in accordance with some implementations.
Figure 5 illustrates distances determined based on information from multiple sources for use in adjusting camera focus in accordance with some implementations.
Figures 6A-B illustrate use of a ray casting technique to identify distances of portions of an environment that are close to a user's point of regard in accordance with some implementations.
Figure 7 is a flowchart representation of an exemplary method that adjusts the focus of a camera via a multi-modal sensor fusion process in accordance with some implementations.
Figure 8 is an example electronic device in accordance with some implementations.
Figure 9 illustrates an example head-mounted device (HMD) in accordance with some implementations.
Figure 10 illustrates examples of various fallback modes in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous specific details are provided herein to afford those skilled in the art a thorough understanding of the claimed subject matter. However, the claimed subject matter may be practiced without these details. In other instances, methods, apparatuses, or systems, that would be known by one of ordinary skill, have not been described in detail so as not to obscure claimed subject matter.

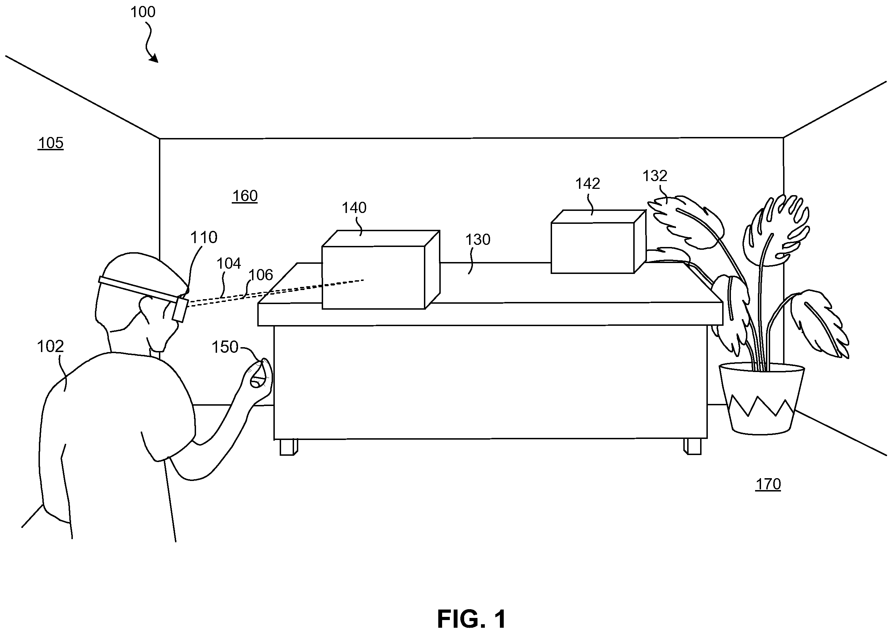

**Figure 1** illustrates an exemplary operating environment 100 in accordance with some implementations. In this example, the example operating environment 100 involves an exemplary physical environment 105 that includes physical objects such as desk 130, plant 132, a first object 140, a second object 142, wall 160, and floor 170. Additionally, physical environment 105 includes user 102 wearing device 110.

The device 110 includes sensors for acquiring image data of the physical environment. The image data can include light intensity image data and/or depth data. For example, the device 110 may have one or more sensors that are video cameras for capturing RGB data and/or one or more sensors that are depth sensors (e.g., structured light sensors, time-of-flight sensors, or the like) for capturing depth data. The sensors may include a first light intensity camera that acquires light intensity data for the left eye viewpoint and a second light intensity camera that acquires light intensity data for the right eye viewpoint of the physical environment. Additionally, the sensors may include a first depth camera that acquires depth image data for the left eye viewpoint and a second depth camera that acquires depth image data for the right eye viewpoint of the physical environment. Alternatively, one depth sensor may be utilized to provide depth image data for both the left eye viewpoint and the right eye viewpoint. Alternatively, depth data can be determined based on the light intensity image data, thus not requiring a depth sensor.

In this example of Figure 1, the device 110 is an HMD providing passthrough video, e.g., one or more outward-facing cameras on the device 110 are capturing images of the physical environment 105 and displaying them to the user 102 on one or more internal displays. For example, a first camera (e.g., a left eye camera) may capture images that are displayed to the user's left eye and a second camera (e.g., a right eye camera) may capture images that are displayed to the user's right eye. The images may be adapted (e.g., warped) to correspond to each eye's viewpoint such that each eye is provided with a view of the physical environment from that eye's viewpoint, e.g., each eye sees a view corresponding to what the eye would see if observing the physical environment directly, without the HMD.

The user's gaze in viewing such views thus corresponds to directions towards depictions of the objects in the physical environment 105. The user's gaze direction (i.e., towards the one or more HMD displays) thus corresponds to the directions towards physical objects depicted at the gaze-upon locations on the one or more displays. As illustrated in Figure 1, the gaze of the user 102 towards a depiction of first object 140 is towards the first object 140 in the physical environment. In this example, the first object 140 is closer (e.g., a different depth) to the user 102 (e.g., on top of and towards the front of the desk 130) than the second object (e.g., located more towards the back of the desk 130). The gaze of the user 102 is illustrated as a left eye gaze 104 and right eye gaze 106. The gaze of the user may be detected by one or more sensors, e.g., one or more inward facing eye sensors in an HMD.

In some implementations, the device 110 includes an eye tracking system for detecting eye position and eye movements (e.g., eye gaze characteristic data). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user 102 (e.g., via sensor 120). Moreover, the illumination source of the device 110 may emit NIR light to illuminate the eyes of the user 102 and the NIR camera may capture images of the eyes of the user 102. In some implementations, images captured by the eye tracking system may be analyzed to detect position and movements of the eyes of the user 102, or to detect other information about the eyes such as pupil dilation or pupil diameter. Moreover, the point of gaze estimated from the eye tracking images may enable gaze-based interaction with content shown on the display(s) of the device 110.

In some implementations, the device 110 is configured to present a view that includes virtual or computer-generated content to the user 102 on one or more displays. The presented environment can thus provide a view of an extended reality (XR) environment that is entirely real (e.g., all passthrough video), entirely virtual (e.g., all computer-generated or other content different than the passthrough), or a combination of passthrough and non-passthrough content. The user's gaze direction, as detected by one or more sensors, may correspond to the user looking at real or virtual objects within an XR environment. The user gaze may provide an indication of what aspects (e.g., objects or portions) of the physical environment 105 should be prioritized in determining how to focus the one or more cameras capturing images of that physical environment, e.g., how to focus the outward facing sensors/cameras on an HMD.

In some implementations, the device 110 provides an XR environment that presents virtual content that provides a graphical user interface (GUI). A GUI may provide one or more functions. In some implementations, the functions include image editing, drawing, presenting, word processing, website creating, disk authoring, spreadsheet making, game playing, telephoning, video conferencing, e-mailing, instant messaging, workout support, digital photographing, digital videoing, web browsing, digital music playing, and/or digital video playing. Executable instructions for performing these functions may be included in a computer readable storage medium or other computer program product configured for execution by one or more processors.

The user interests and attention while viewing views of an XR environment may account for the content that is displayed, e.g., what types of GUI content are available, whether the user is looking at or otherwise interacting with that GUI content, the relationship between the positioning of real and virtual content within the 3D space that is depicted in the view, whether the user is looking at their own hand 150, how the user is moving, and numerous other factors, as described herein. This information from multiple sources may be fused (e.g., combined) to determine focus adjustments appropriate for the viewing user's current interests and attention.

In some implementations, the device 110 employs various motion sensor, physiological sensor, detection, and/or measurement systems. In an exemplary implementation, detected motion data includes inertial head pose measurements determined by an IMU or other tracking systems. Inertial head pose measurements may be obtained by the IMU or other tracking systems. In some implementations, detected physiological data may include, but is not limited to, electroencephalography (EEG), electrocardiography (ECG), electromyography (EMG), functional near infrared spectroscopy signal (fNIRS), blood pressure, skin conductance, or pupillary response. Moreover, the device 110 may simultaneously detect multiple forms of physiological data in order to benefit from synchronous acquisition of physiological data. Moreover, in some implementations, the physiological data represents involuntary data, e.g., responses that are not under conscious control. For example, a pupillary response may represent an involuntary movement.

The device 110 may additionally include sensors that enable understanding the user's hands and other body features and the environment. Outward-facing sensors on the device 110 may capture RGB/light intensity and/or depth sensor images of the physical environment 105 that are shown on one or more internal HMD displays, e.g., in real time, and also used to understand the objects (e.g., identifying object types, object materials, object positions and orientations, activities occurring, etc.) within the physical environment 105.

In an example in which device 110 is implemented as a hand-held device, sensors on the back of the hand-held device may capture RGB/light intensity and/or depth sensor images of the environment that are shown on a display on the device, e.g., in real time, and also used to understand the objects (e.g., identifying object types, object materials, object positions and orientations, activities occurring, etc.) within the physical environment 105.

In some implementations, the device 110 is a handheld electronic device (e.g., a smartphone or a tablet). In some implementations the device 110 is a laptop computer or a desktop computer. Such devices may include cameras that capture images of the physical environment that are displayed, e.g., in real time, using one or more displays. In some implementations, the device 110 may enclose the field-of-view of the user 102.

In some implementations, the functionalities of device 110 are provided by more than one device. In some implementations, the device 110 communicates with a separate controller or server to manage and coordinate an experience for the user. Such a controller or server may be located in or may be remote relative to the physical environment 105. Thus, while this example and other examples discussed herein illustrate a single device 110 in a real-world environment 105, the techniques disclosed herein are applicable to multiple devices as well as to other real-world environments. For example, the functions of device 110 may be performed by multiple devices.

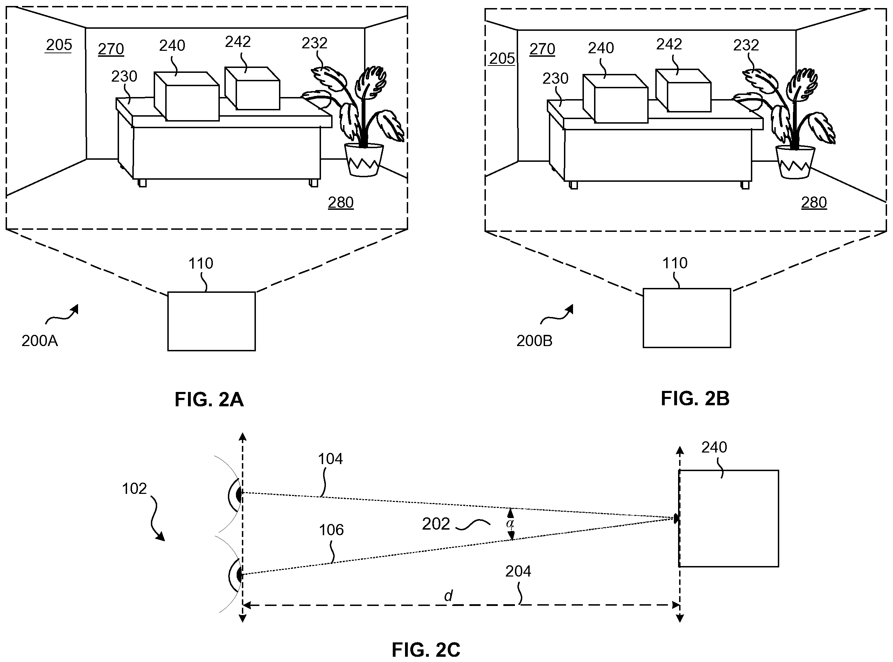

**Figures 2A and 2B** illustrate exemplary views provided by the display elements of device 110. The views present a 3D environment 205 that includes aspects of a physical environment (e.g., environment 105 of Figure 1). In some implementations, the 3D environment 205 may be an XR environment. Presenting the views of the 3D environment 205 may include presenting pass-through video, pass-through video blended with virtual content, or all virtual content.

The first view 200A, depicted in Figure 2A, provides a view of the physical environment 105 from a particular viewpoint (e.g., left-eye viewpoint) facing the desk 130. Accordingly, the first view 200A includes a representation 230 of the desk 130, a representation 232 of the plant 132, a representation 240 of the first object 140, a representation 242 of the second object 142, a representation 270 of wall 160, and a representation 280 of floor 170 from that viewpoint. The second view 200B, depicted in Figure 2B provides a similar view of the physical environment 105 as illustrated in view 200A, but from a different viewpoint (e.g., right-eye viewpoint) facing a portion of the physical environment 105.

**Figure 2C** illustrates a top-down view of a left eye gaze 104 and a right eye gaze 106 in the 3D environment of Figures 2A and 2B, and a corresponding convergence angle 202. In some implementations, determining an attention distance d 204 associated with user attention may be based on the convergence angle α 202 determined based on the intersection of the gaze directions. For example, as illustrated in Figure 2C, as the user 102 directs his left eye gaze 104 and right eye gaze 106 at the first object 140 (or towards the representation 240 of the first object 140 if looking at a 3D representation of the physical environment), and the convergence angle α 202 of the left eye gaze 104 and right eye gaze 106 may be determined in order to determine the attention of the user is upon the first object. The distance of that first object may be determined based on the vergence angle. A distance of that first object in the 3D environment may additionally or alternatively be determined based on a 3D mapping of the 3D environment. Thus, in some implementations, the vergence angle provides a first attention distance and the user's looking at an object (e.g., real or virtual at a known distance away in a 3D environment that is being viewed) provides a second attention distance, and these two distances are fused (e.g., averaged, combined via a weighting scheme, combined via an optimization, etc.) to provide a fused attention distance that is used to determine an appropriate camera focus adjustment.

As further described herein, the focus of an external camera (e.g., the one or more cameras providing the passthrough video) may be automatically adjusted based on one or more factors, which may include the attention distance *d 204* determined based on gaze-based vergence, the attention distance determined based on gaze-upon object distance, and distances determined in various other ways. Additional factors used to assess distance and how such factors may be fused together to determine a focus adjustment are explained below. As used herein, distance may refer to distances of content with respect to which a user is predicted to be interested in, interacting with, or otherwise attentive.

Implementations disclosed herein can determine camera focus adjustments using a vast array of data about the user, their environment, and the content depicted in the views presented to them. While eye vergence may be a particularly good indicator of the distance of objects at which a user is looking in some circumstances (and thus a good indicator of camera focus), it may not be as good in other circumstances. For example, gaze signals from which eye vergence is determined may become noisier with increased distance, i.e., vergence-based distance determinations for far away distances may have low confidence. Similarly, users have different eye characteristics and vergence does not work as well for all users, e.g., vergence does not work at all or as well for users with only one eye or other vision impairments. Some implementations, supplement or replace vergence-based focus adjustments using information from other sources.

For example, information about the 3D environment (e.g., XR environment) into which a user is looking can be used to determine a distance to use for a focus adjustment. A system may determine that a user's gaze direction is towards a particular object (e.g., real or virtual) and the distance of that object used to determine the focus adjustment. Some implementations use both vergence-based distances and the distances of 3D objects that are gazed upon to determine a distance (e.g., a weighted average distance) to use for a focus adjustment. In the weighted average example, the weights used in fusing such information may depend upon context. For example, for distances closer to the user (in which confidence in vergence-based predictions is higher), the vergence-based distance may be given a relatively higher weight. In contrast, for distances farther from the user (in which confidence in vergence-based predictions is relatively lower), the vergence-based distance may be given a relatively lower weight.

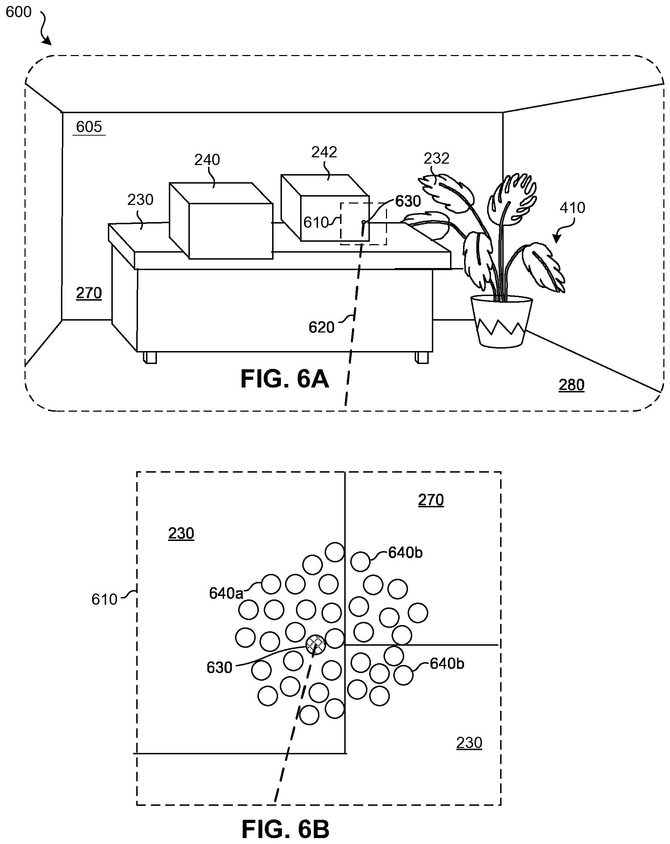

Processes that use distances determined based on identifying gazed-upon objects may account for variability in gaze direction predictions. One such technique uses a sampling technique to identify distance values around a point of regard (e.g., an intersection of the user's gaze with a 3D object as determined based on gaze vergence or otherwise using gaze direction) in order to identify other potential candidate objects (and corresponding distances) at which the user may be looking. Such a technique may account for inaccuracy in gaze tracking and/or the variability inherent in human eye movements. A sampling technique for determining such distances is discussed with respect to Figure 6 below.

Implementations may account for characteristics of the user, user centric information, and/or the dynamics of the focus target. For example, age of the user may have an impact on the preferred speed of focus adjustment. The system may account for user-centric information including, but not limited to, calibration data obtained from a dedicated enrollment step at first launch, e.g., a supervised set of gaze data, ground truth interaction point data, etc. and/or unsupervised in-field calibration data obtained from a continuously streaming set of user inputs, e.g., unsupervised learning from a set of user interactions, e.g., gaze data, assumed interaction point data, etc.

Some implementations utilize a multi-modal fusion algorithm to account for information from a variety of sources to determine a distance to use for a camera focus adjustment. Some implementations utilize a function, e.g., an energy function, that optimizes a distance/focus determination.

Estimates of the distances of objects or portions of an environment with respect to which a user is interested or attentive can be provided by various sources. Vergence-based distances provide one source. Determining the distance of real world or virtual objects from the user's viewpoint provides another source. Identifying certain types of objects, e.g., monitors, books, furniture, static objects, handheld objects such as smart phones, and determining distances based on depth sensor or scene modeling/reconstruction information provides another source. Identify when the user is looking at one of their hands and the position of the hand provides another source. Numerous other sources may be available.

In some implementations, distances from multiple sources are fused by averaging. In some implementations, distances from multiple sources are fused using a decision tree, e.g., that selects certain sources to use and/or combine based on contextual criteria, e.g., lighting, type of environment, vergence distance, what the user is doing with the device, what the captured images will be used for, etc. In some implementations, distances from multiple sources are fused using an optimization. In some implementations, distances from multiple sources are fused using machine learning.

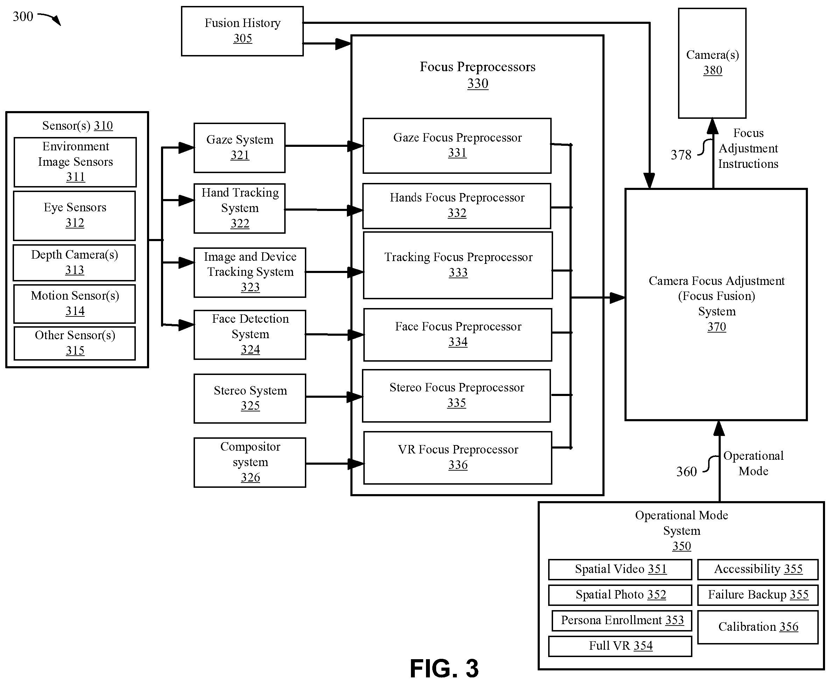

**Figure** 3 illustrates a system flow diagram of an exemplary focus adjustment process. In some implementations, the system flow of the example environment 300 is performed on a device (e.g., device 110 of Figure 1). In some implementations, the system flow of the example environment 300 is performed on processing logic, including hardware, firmware, software, or a combination thereof. In some implementations, the system flow of the example environment 300 is performed on a processor executing code stored in a non-transitory computer-readable medium (e.g., a memory).

In an example implementation, the environment 300 includes a sensor data pipeline that acquires or obtains data (e.g., image data from image source(s), depth data, motion data, etc.) regarding a user (e.g., user 102 of Figure 1) and a physical environment (e.g., physical environment 105 of Figure 1). A user (e.g., user 102) may be in a room acquiring sensor data from sensor(s) 310 while viewing a view of the environment captured by camera 380 (which may be one of the sensors 310).

The sensors 310 include environment image sensors 311, eye sensors 312, depth cameras 313, motion sensors 314, and other sensors 315. The one or more environment image sensors 311 may include one or more light intensity camera(s) (e.g., B/W or RGB cameras) that acquire light intensity image data (e.g., a sequence of B/W or RGB image frames) about the environment, which may include the user's hands, body, etc.

The one or more eye sensors 312 may include, for example, include a set of inward facing camera's (IFC), which may be IR, that acquire image data about the user for eye gaze characteristic data, facial movements, etc.

The one or more depth camera(s) 313 may acquires depth data such as depth images comprising points of depths/distances that are measured. The one or more depth camera(s) 313 may determine a depth of an identified portion of a 3D environment. For example, a distance of the object from the capturing device (e.g., the distance from device 110 and the first object 142 in Figure 1), as illustrated by user attention distance d 204 in Figure 2C). In some implementations, depth may be determined based on sensor data from a depth sensor on the capture device. In some implementations, depth of the identified portion of the 3D environment is determined based on the stereoscopic video. For example, depth information may be determined based on stereo RGB image data, thus not requiring a depth sensor. In some implementations, depth of the identified portion of the 3D environment is determined based on the stereoscopic video.

The one or more other sensors 315 may include location sensor(s) that acquires specific location data from location sensors/devices (e.g., location sensor(s)) such as WiFi/GPS data to determine an exact location, i.e., mapping data to determine whether the current environment is indoors or outdoors. The one or more other sensors 315 may include an ambient light sensor that acquires ambient light data (e.g., multiwavelength ALS data), UV/IR sensors (e.g., a UV and IR sensor that are joined together in a single apparatus, or a separate sensor for UV and IR) that acquires UV and IR data, and other data from other sensors.

Sensor data from sensors 310 are input to gaze system 321, hand tracking system 322, image and device tracking system 323, and face detection system 324, and these systems 321, 322, 323 provide output information to the focus preprocessors 330. The focus preprocessors 330 use the output and fusion history 305 to produce focus distance contributor information. The focus distance contributor information is fused by the camera focus adjustment system 370. This may involve using operational mode information 360 from operational mode system 350 and/or other contextual information, to provide focus adjustment instructions 378 to adjust the focus of one or more cameras 380.

The gaze system 321 uses information from the sensors 310 to determine one or more gaze directions, which are provided to gaze focus preprocessor 331 to produce gaze results, such as a 3D vergence-based distance. Such gaze directions may be relative to a 3D environment such as an XR environment that is based on the coordinate system of the device's physical environment. The gaze system 321 may produce gaze rays corresponding to a gaze direction of each eye within a 3D environment or 3D coordinate system corresponding to a 3D environment. The vergence between these gaze directions may be used to determine a depth/distance, as described with respect to Figure 2C above.

The hand tracking system 322 uses information from the sensors 310 generate hand tracking information, which is provided to hands focus preprocessor 332 to produce hand tracking results, such as 3D hands distance. This may involve tracking 3D positions of certain hand reference points, e.g., palm center, pointer fingertip, etc. This may involve tracking the 3D positions of one or more joints on a virtual skeleton used to represent the position, orientation, and configuration of the hand. In some implementations, hands tracking information identifies whether the user is looking at a hand at a given point in time.

The image and device tracking system 323 uses information from the sensors 310 to track the position and/or orientation of the device within a 3D environment. This information is provided to tracking focus preprocessor 333 to produce 3D tracking information, e.g., the 3D positions of objects within the physical environment, the distances of such objects from the current user viewpoint, the relative distances of physical objects (or portions thereof) in the physical environment, the types of those objects, etc. A user may be predicted to have more or less interest in a portion of a physical environment based on the type of objects there, the distances of those objects, the activity occurring there, and other factors that may be assessed via the image and device tracking processes.

Movement of the device in the physical environment may correspond to movement of the device in a corresponding XR environment. Some implementations include a VIO system to determine equivalent odometry information using sequential camera images (e.g., light intensity data from light intensity camera(s)) to estimate the distance traveled by the device. Alternatively, some implementations of the present disclosure may include a simultaneous localization and mapping (SLAM) system. The SLAM system may include a multidimensional (e.g., 3D) laser scanning and range measuring system that is GPS- independent and that provides real-time simultaneous location and mapping. The SLAM system may generate and manage data for a very accurate point cloud that results from reflections of laser scanning from objects in an environment. Movements of any of the points in the point cloud may be accurately tracked over time, so that the SLAM system can maintain precise understanding of its location and orientation as it travels through an environment, using the points in the point cloud as reference points for the location.

In some implementations, the distances to a user's point of regard within a 3D environment is determined based on determining where the user is gazing within the physical environment, e.g., at which real object. Information about distances to the point of regard and surrounding physical environment portions, e.g., as provided in the 3D tracking information 343, may be used as indications of the user's interest, attention, or other user aspects.

The face detection system 324 uses information from the sensors 310 to track information about features of the user's face, which is provided to face focus preprocessor 334 to produce 3D face results. The 3D face results may provide features that may be associated with the interests, attention, or other aspects of the user. In some implementations, this involves determining an expression expressed on the face of the user, e.g., based on downward facing cameras capturing images of the user's checks and lips. In some implementations, this involves determining a position and/or orientation of the face. The direction that the face is facing may be an indication of the user's interest, attention, or other user aspects. In some implementations, the face detection system is part of a persona/avatar enrollment process in which the user takes of an HMD and faces the HMD's outward facing camera towards their uncovered face to capture images of their face from which the persona/avatar may be generated. In this example, the user's face is an object of interest and thus the face detection system may identify the distance to the face and use that in adjusting the focus of the camera used to capture those enrollment images.

A stereo system 325 may be included in the environment 300 and implemented to produce information about the stereo view, e.g., the left and right eye views, that is provided to stereo focus preprocessor 335 to provide stereo-based focus distance information. The stereo system 325 may be used to provide depth. However, the stereo system 325 may also provide color features that are more likely to be a focal point of interest for the user, and trigger a vergence stimulus. This information may be used as a prior to guide the camera focus.

A compositor system 326 may also be included in the environment 300 and implemented to produce information about virtual content, e.g., to VR focus preprocessor 336. For example, compositor system may position GUI or other virtual content in views of a 3D environment to provide XR views. The virtual content may have positions that correspond to 3D positions within the XR environment and thus positions relative to objects in a corresponding real-world environment. For example, as illustrated in Figures 2A-B, the virtual objects 240, 242 may be depicted in views of an XR environment and these objects may have 3D positions relative to objects in the corresponding physical environment, e.g., the first virtual object 240 being over the front edge on the left side of desk 130 and the second virtual object 240 being over the back edge on the right side of desk 130. The relative 3D positions of real and virtual objects within a 3D environment may be used in determining indications of the user's interest, attention, or other user aspects.

In some implementations, the distances to a user's point of regard within a 3D environment is determined based on determining where the user is gazing within the 3D environment, e.g., identifying a point on a surface of a real or virtual object at which the user is gazing. Information about distances to the point of regard and surrounding physical environment, e.g., as provided in the 3D tracking information 343, may be used as indications of the user's interest, attention, or other user aspects.

The operational mode system 350 may determine a current operational mode 360 of the device and provide that information to the camera focus adjustment system 370. The camera focus adjustment system may use this information to determine how to fuse the focus distance contributor information 340. The operational mode system 350 may identify which of one or more operational modes are currently applicable, e.g., which of a normal mode, a spatial video capture mode 351, a spatial photo capture mode 352, a persona enrollment mode 353, a full VR mode 354, an accessibility mode 355, a failure backup mode, or a calibration mode 356 is currently active.

The camera focus adjustment system 370 may use this information to fuse the focus distance contributor information, e.g., fusing the information from different sources/contributors in different ways in the different operational modes. The camera focus adjustment system 370 may also use the fusion history 305 (e.g., storing how the focus distance contributor information 340 was fused and/or prior focus adjustments in a number of previous instants in time, e.g., for the last frame, last 5 frames, last 10 frames, last 20 frames, etc. It may use this information to smooth focus adjustments over time, for example, to avoid sudden focus changes that might negatively impact the viewing user's experience.

In some implementations, a normal operational mode utilizes vergence-based distance and monocular fusion with other distance signals as a fallback. In some implementations, a full VR mode 354 uses a fixed focus, for example, based on the average distance of objects in the scene or an object in the scene at which the user is looking. In some implementations, a spatial photo capture mode 352 uses bracketed focus stacking to capture multiple photos using different focus levels and then combine them so that most or all content is in focus. In some implementations, the persona enrollment mode 353 is a mode in which the user holds the device out in front of them and captures images of themselves to generate a persona or avatar. This mode, in one example, may determine a distance to the user's face and use that distance to determine the focus adjustment. In some implementations, in an object capture mode a user captures images and other sensor data of an object to generate a 3D model of the object. In this mode, it may be desirable to have the focus adjustment to be more heavily influenced by the object (as opposed to the user's gaze), which is not necessarily on the object being scanned. In some implementations, a view capture mode provides a mode that gets engaged when the user streams content (e.g., content seen in an HMD) to another device (e.g., a TV or computer screen) and places additional challenging near real-time constraints. In some implementations, an enterprise mode provides mode that may be driven by the experience or task at hand, for instance, world-locked to a physical or virtual object in a scene. The requirements may vary per client.

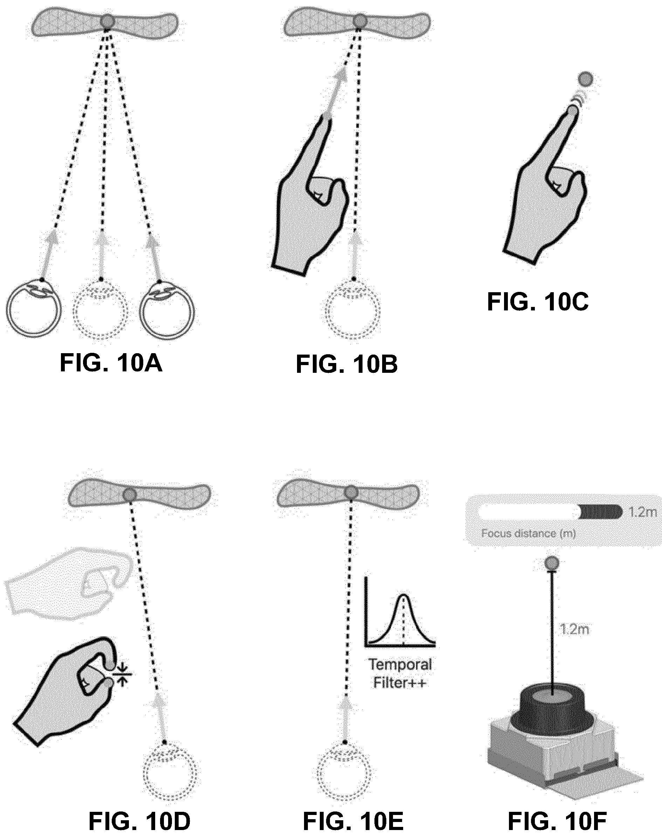

In some implementations, one or more fallbacks are provided. There may be a variety of health and/or vision conditions which make one or more sensors unavailable for fusion. Various fallbacks may be used in various circumstances as illustrated in Figure 10A-F. For example, a nominal mode of operation may utilize vergence gaze, depth, binocular gaze, and/or other sensors as illustrated in Figure 10A. A point ray mode may provide binocular gaze ray to fingertip ray to depth, using hand tracking, depth, and/or binocular gaze, as illustrated in Figure 10B. A virtual focus mode may focus on 3D virtual touch point as illustrated in Figure 10C. This may be controlled by wrist or head, body, trackpad, controller, etc. A pinch ray mode may utilize a binocular pinch ray and depth intersection using hand tracking, depth, and/or binocular gaze, as illustrated in Figure 10D. A binocular depth mode may utilize a binocular gaze and depth intersection using binocular gaze and depth as illustrated in Figure 10E. A temporal filter may be used. A constant mode may focus on a constant distance as illustrated in Figure 10F.

In some implementations, the fusion of distance information from multiple sources is fused based on confidence. For example, one source of data may provide information at a slower rate than another source, e.g., hands information may be provided at a slower rate than other sources of information. During the later portion of the time period between hands data events, the confidence in the last received hands data still being relevant may be relatively low. In fusing distance information during such times, the system can account for such lower confidence, for example, by giving the hands data-based distance estimates less weight or importance or by rejecting such information when confidence is below a given threshold.

In some implementations, distance signals from multiple sources are compared with one another to determine which signals to trust. For example, if distance signals from 5 sources are 5.5 feet, 5.4 feet, 12 feet, 5.8 feet, and 5.5 feet, the outlier (i.e., 12 feet) may be given a low confidence or rejected from consideration.

In some implementations, a normal operation mode determines a point of regard based on gaze vergence (or otherwise) and then uses a sampling technique to determine information about the areas around that point at which the user may actually be looking. The sampling, e.g., by shooting rays around the point of regard and determining the distances of intersections of the rays with portions of the 3D environment, provides information that the system can use to understand the topology of the scene around the point of regard, which provides information about how much confidence to have in the vergence point of regard-based distance assessment. In some implementations, outliers around a point of regard are excluded from use. In some implementations, if there are may outliers around a point of regard then the confidence value in the distance determined based on the point of regard is reduced. If all the points around the point of regard have similar distances, then confidence in those points may be determined to be relatively high and/or the distances to those points may be averaged to provide a distance estimate. If not, then another technique may be used, for example falling back on a vergence-alone-based distance. In other words, confidence may be used to determine whether and how to average or otherwise combine distance estimates from multiple sources.

In some implementations, signals from multiple sources are only averaged or otherwise fused when they are roughly in agreement, e.g., within a threshold accuracy of one another.

In some implementations, vergence-based distance estimates are prioritized or more highly weighted in a near field (e.g., within a threshold distance such as 2 meters) and other types of distance measures are used for greater distances.

Some implementations provide temporal smoothing of focus adjustments to avoid changing focus too abruptly. For example, this may be implemented by using a previous estimate as a predictor for the next one or by implementing exponential smoothing. Adjusting distance based on user eye-vergence may generally follow closely to what people expect. However, when other signals are used, e.g., when vergence is not available, the system may actively control how fast focus transitions are made ensure a desirable user experience.

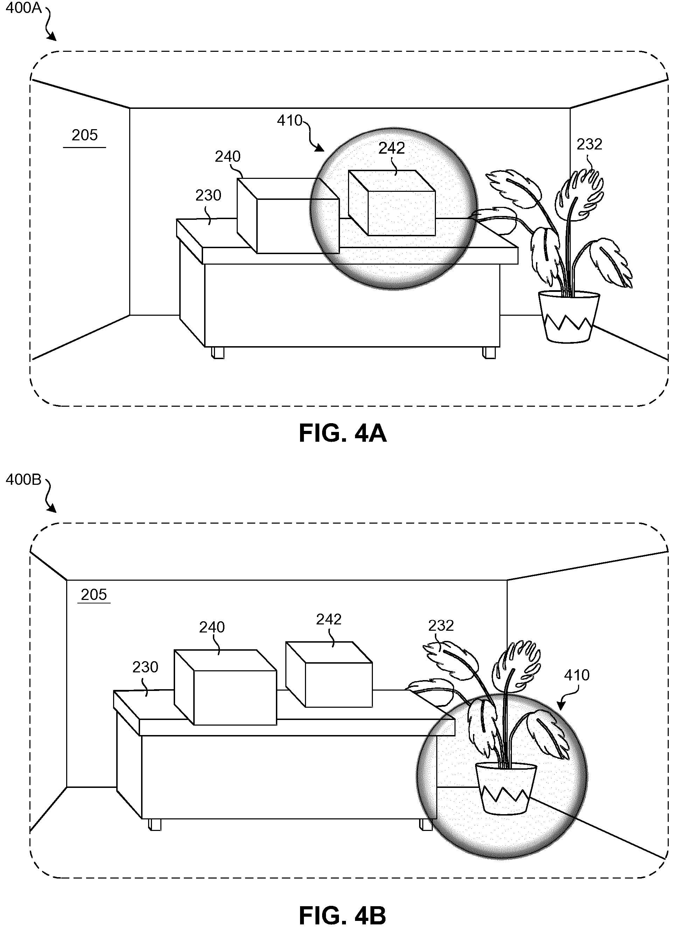

**Figures 4A and 4B** illustrate example views 400A, 400B, respectively, provided by the device of Figure 1 with adjusted focus of a camera based on user attention. In particular, views 400A, 400B include a focus element 410 that represents an area that a camera may automatically adjust to focus upon according to one or more techniques as discussed herein (e.g., based on vergence- and other assessments). The focus element 410 is not directly viewable by the user 102 within each view 400A, 400B, etc., but is provided to illustrate the focus of the camera when captured the images used to provide views. View 400A illustrates a focus while the user directs his or her attention (e.g., gaze) towards the representation 242 of the second object 142. View 400B illustrates a change in focus of the view from Figure 4A, as the user 102 has changed his or her attention (e.g., gaze) towards the bottom of the representation 232 of the plant 132.

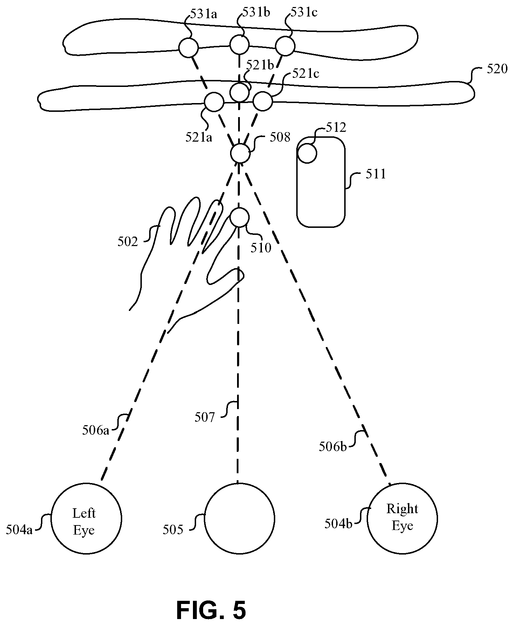

**Figure 5** illustrates distances from multiple sources for use in adjusting camera focus. In this example, the user's left eye 504a is determined to have a gaze direction 506a and the user's right eye is determined to have a gaze direction 506b, and these gaze directions 506a, 506b are determined to converge at point 508 within a 3D environment/coordinate system. This point 508 may be considered a point of regard and provides a first distance from the user (e.g., a vergence-based distance) that may be used to determine a focus adjustment.

The user's interest/attention may be directed to the user's hand 502 and a corresponding distance identified. Whether the user is looking at (or otherwise interested in/attentive to) the hand 502 may be determined in various ways. For example, it may be determined by determining whether a gaze direction (e.g., left eye gaze direction 506a, right eye gaze direction 506a, or a monocular (centered) gaze direction 505 (from a center eye position 505)) intersects the hand 302 in the 3D environment/coordinate system. As another example, it may be determined by determining how proximate the hand 502 (or a portion thereof) is to a point of regard (e.g., point 508) which may be determined by another means, e.g., based on vergence. Thus, if the hand 502 is within a threshold distance in the 3D environment/coordinate system a point of regard, the user's interest/attention may be determined to be on (or possibly on) the hand 502. The proximity of the hand 502 to the point of regard may be an indicator of likelihood or confidence that the user's interest/attention is on the hand 502. An intersection between a gaze direction (e.g., left eye gaze direction 506a, right eye gaze direction 506a, or a monocular (centered) gaze direction 505) with the hand 502, may be used to identify a point 510. This point 510 (or one or more nearby or otherwise different points on hand 502) provides one or more additional distances from the user (e.g., a vergence-based distance) that may be used to determine a focus adjustment. In some implementations, a device includes specialized hand tracking functionality to precisely track hand position, orientation, and configuration in 3D space. This information may be used to provide a distance (for camera focus adjustment purposes) in circumstances in which it is determined that the user is attentive to a portion of the hand.

The user's interest/attention may be directed to an electronic device such as a monitor or mobile device 511. Whether the user is looking at or otherwise interested in/attentive to) an electronic device may be determined in various ways. For example, it may be determined by determining whether a gaze direction (e.g., left eye gaze direction 506a, right eye gaze direction 506a, or a monocular (centered) gaze direction 505 (from a center eye position 505)) intersects a device such as mobile device 511 in the 3D environment/coordinate system. As another example, it may be determined by determining how proximate the device (or a portion thereof) is to a point of regard (e.g., point 508) determined by another means, e.g., based on vergence. Thus, if the mobile device 511 is within a threshold distance in the 3D environment/coordinate system a point of regard, the user's interest/attention may be determined to be on (or possibly on) the mobile device 511. The proximity of the device 511 to the point of regard may be an indicator of likelihood or confidence that the user's interest/attention is on the mobile device 511. The position of the device 511 relative to the user's viewpoint/camera position may be determined in various ways. In one example, it is determined based on communications between the mobile device 511 and the user's device. In another example, it is determined based on image analysis, e.g., based on recognizing the device in image data and predicting its distance based on the device's depicted size in the image data in comparison to the device's known actual dimensions. In another example, it is determined based on gaze direction in a manner similar to that described above with respect to determining hand distance, e.g., using image/depth sensor data to precisely track an object's position in a 3D enviornment. A point on the mobile device 511 such as point 512 (or one or more nearby or otherwise different points on mobile device 511) provides one or more additional distances from the user (e.g., a vergence-based distance) that may be used to determine a focus adjustment.

The user's interest/attention may be directed to other real objects within the depicted physical environment 530 and/or to virtual content 520. Whether the user is looking at or otherwise interested in/attentive to something in the physical environment 530 and/or virtual content 520 may be determined in various ways. For example, it may be determined by determining intersections of a gaze direction (e.g., left eye gaze direction 506a, right eye gaze direction 506a, or a monocular (centered) gaze direction 505 (from a center eye position 505)) and/or one or more associated directions (e.g., rays cast to identify points near the point of regard) with the depicted physical environment 530 and/or the virtual content 520. In this example, points 531a, 531b, and 531c are identified on portions of the depicted physical environment 530. Similarly, points 521a, 521b, and 521c are identified on portions of the depicted physical environment 520. The proximity of each of these points 521a, 521b, 521c, 531a, 531b, and 531c relative to the point of regard (e.g., point 508) in 3D space may be used to assess the likelihood/confidence that each of these points corresponds to the user's interest/attention. These points 521a, 521b, 521c, 531a, 531b, and 531c provide one or more additional distances from the user (e.g., a vergence-based distance) that may be used to determine a focus adjustment.

Figure 5 illustrates a few exemplary sources of distance information from which a focus adjustment may be determined. Additional sources may be utilized. Distance estimates provided by these sources and other sources may be fused according to a fusion characteristic, e.g., determining how to weight the distances provided by the sources in averaging them or otherwise as factors accounted for in an optimization function that is applied to determine a distance by fusing the distances identified from multiple sources. Distances may be fused based on confidence that each corresponds to the user's actual interest/attention and/or based on the operational modality of the device.

Figures 6A-B illustrate use of a ray casting technique to identify distances of portions of a 3D environment that are close to a user's point of regard. Figure 6A illustrates a user's point of regard 630 is identified within the XR environment 605 (which corresponds XR environment 205 depicted in Figures 2A-2B). This point of regard 630 may be identified in various ways. In one example, a monocular (e.g., centered) gaze direction 620 is used to identify the point of regard by determining where that gaze direction intersects with a real or virtual content item in the XR environment. In this example, it is determined to intersect with representation 242 of the second virtual object. In another example, gaze direction vergence is used to determine the point of regard 630, for example, as described with respect to Figures 2C and 5.

Figure 6B illustrates a portion of the view of the XR environment of Figure 6A, i.e., a portion corresponding to area 610. Sampling points, e.g., points 640a, b, c, are determined using a sampling technique, e.g., generating rays near to one or more determined gaze directions. Such a sampling technique may be used to determine information about the areas around the point of regard 630 at which the user may actually be interested/attentive. The sampling, e.g., by shooting rays around the point of regard 630 and determining the distances of intersections of the rays with portions of the 3D environment, provides information that the system can use to understand the topology of the scene around the point of regard 630. This may provide useful information. For example, it may be used to determine how much confidence to have in a vergence-based or monocular-based point distance assessment. In some implementations, outliers around a point of regard 630 are excluded from use based on their difference from the point of regard's distance being too great. In some implementations, if there are many outliers around a point of regard, then the confidence value in the distance determined based on the point of regard is reduced. If all the points around the point of regard have similar distances, then confidence in the point of regard-based distance may be increased. Moreover, the distances of the point of regard and those additional points may be averaged to provide a distance estimate that may be more accurate than the point of regard's distance alone. If less than all (or less than a threshold percentage) of the points around the point of regard 630 are within a threshold distance of the point of regard 630 in 3D space, then another technique may be used, for example falling back on a vergence-alone-based distance. In other words, confidence may be used to determine whether and how to average or otherwise combine distance estimates from multiple sources.

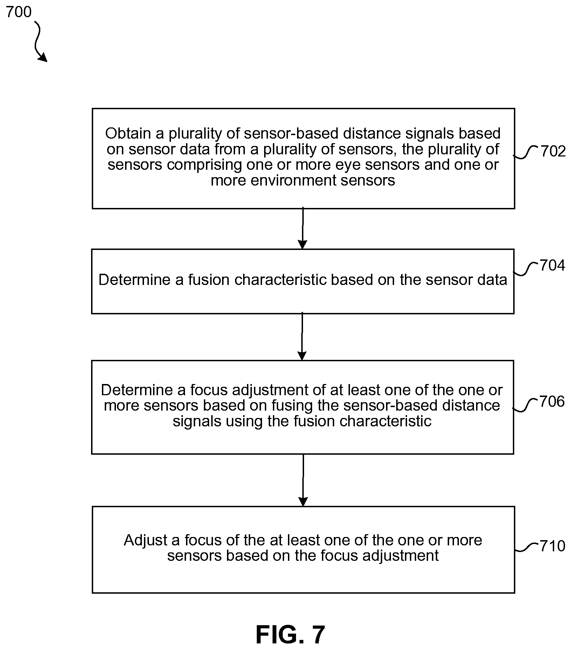

**Figure 7** is a flowchart representation of an exemplary method 700 that adjusts the focus of a camera via a multi-modal sensor fusion process. In some implementations, the method 700 is performed by a device (e.g., device 110 of Figure 1), such as an HMD, mobile device, desktop, laptop, or server device. In some implementations, the device has a screen for displaying images and/or a screen for viewing stereoscopic images such as an HMD. In some implementations, the method 700 is performed by processing logic, including hardware, firmware, software, or a combination thereof. In some implementations, the method 700 is performed by a processor executing code stored in a non-transitory computer-readable medium (e.g., a memory).

At block 702, the method 700 involves obtaining a plurality of sensor-based distance signals based on sensor data from a plurality of sensors, the plurality of sensors comprising one or more eye sensors and one or more environment sensors. As example, the sensor data may include outward-facing sensor data (image, depth, etc.), inward facing sensor data such as eye gaze characteristic data (i.e., gaze convergence), or other sensor data such as HMD motion/ pose data.

At block 704, the method 700 further involves determining a fusion characteristic based on the sensor data.

Determining the fusion characteristic may be based on confidence associated with the sensor-based distance signals. In one example this process involves determining a context, determining confidence in one or more of the signals based on the context, and then a fusion characteristic that accounts for the confidence. In some implementations, determining the fusion characteristic involves determining a distance based on identifying a point of regard, determining confidence associated with the sensor-based distance signals based on the point of regard, and determining the fusion characteristic based on the confidence associated with the sensor-based distance signals. Determining the fusion characteristic may involve determining a vergence distance based on the sensor data based on an intersection of gaze directions, determining confidence associated with the sensor-based distance signals based on the vergence distance. and determining the fusion characteristic based on the confidence associated with the sensor-based distance signals.

Determining the fusion characteristic may be based on an operational mode. In one example, the process involves determining an operational mode and then a fusion characteristic based on the operational mode. Example operational modes from which a current operation mode may be selected include, but are not limited to, a nominal/normal mode, a passthrough video mode, a virtual reality (VR) mode, spatial photo capture mode, a spatial video capture mode, a persona enrollment or avatar enrollment mode, a calibration mode (e.g., APE/in-field), an object capture mode configured to generate a model of an object, and a fallback mode. In an exemplary nominal/normal mode, the fusion characteristic may produce a focus adjustment using only a vergence-based distance signal. In an exemplary VR mode, the fusion characteristic may produce a focus adjustment using a fixed focus, e.g., fixed on a particular VR object's distance. In an exemplary spatial photo capture mode, the fusion characteristic produces a focus adjustment using bracketed focus stacking. In an exemplary persona enrollment / avatar enrollment mode, for example, in which the device is held out in front of a face of the user, the fusion characteristic may produce a focus adjustment based on detecting the face of the user and determining a distance of the face of the user from the electronic device. In an exemplary object capture mode, the fusion characteristic may produce a focus adjustment by identifying a target object (e.g., object being scanned) and determining a distance of the target object from the electronic device. In an exemplary fallback mode, the fusion characteristic may produce a focus adjustment based on determining signal loss characteristics of the plurality of sensor-based distance signals.

In some implementations, a fusion characteristic is determined based on optimizing the vergence-based distance signal and a distribution of distances of a point-of-regard-based distance signal, e.g., a point of regarding distance signal and one or more other distance signals identified based on the point of regard distance signal, e.g., based on proximity of associated objects, points, etc., for example, as described with respect to Figures 5 and 6A-B.

At block 706, the method 700 further involves determining a focus adjustment of at least one of the one or more sensors (e.g., an outward facing camera) based on fusing the sensor-based distance signals using the fusion characteristic.

In some implementations, the fusion characteristic produces the focus adjustment based on averaging distances determined via multiple modalities and/or from multiple sources. In some implementations, the fusion characteristic produces the focus adjustment by performing a weighted average of distances, e.g., where the weights are determined based on confidence and/or operational mode.

In some implementations, the fusion characteristic produces the focus adjustment based on combining: a vergence-based distance signal corresponding to a distance at which gaze directions intersect; and a point-of-regard-based distance signal corresponding to one or more distances at which one or more rays associated with a gaze direction intersect one or more environment objects (e.g., distance sampling rays around a point of regard). The one or more environment objects may include one or more real objects and/or one more virtual objects of an XR environment.

In some implementations, a point of regard distance signal is determined. In some implementations, a point of regard distance signal includes, is based on, or otherwise accounts for distances determined by sampling rays around a point of regard identified based on the gaze direction and identifying a distribution based on distances of intersections of the rays with the one or more objects. A point of regard distance signal comprises distances may be determined by sampling rays around a point of regard identified based on the gaze direction and identifying a distribution based on distances of intersections of the rays with the one or more objects.

The focus adjustment may be determined based on an optimization function determined or configured based on the fusion characteristic.

At block 708, the method 700 further involves adjusting a focus of the at least one of the one or more sensors based on the focus adjustment.

In some implementations, method 700 involve determining what a user is interested in/attending to in order to adjust a focus of a camera. In some implementations,the method 700 may include an analysis of a scene of an environment through a depth map, saliency map, and the like. In some implementations, the method 700 may include sensor data of a user such as tracking gaze, head pose, user motion, etc. For example, the adjusted focus may be based on biasing the focus depending on user behavior (e.g., if the user is walking around, the system may want to bias the focus to a longer distance, or if the user is seated, surrounded by close objects, the system may want to bias closer focus). In some implementations, the method 700 may be based on virtual content (e.g., rendered content) and/or be application specific (e.g., application specific control of focus). For example, a productivity application, where the user is expected to work with objects close to them (e.g., seated at a desk and using keyboard and mouse) the application behavior may control the focus to be closer, or if the application is an archery application, the system may bias the focus to a further distance). In some implementations, each of these input methods (e.g., scene analysis data, sensor data of a user, rendered content, application specific content, and the like) may be used together to set an ideal focus distance based on all factors, and in some implementations, each input method may have different weightings depending on the use case.

The fusion characteristic may change over time based on changes in context occurring over time, e.g., changing is the user's gaze, hand position, position relative to environment objects, changes occurring the physical environment, changes occurring in virtual content, etc. Accordingly, the method 700 (and other techniques disclosed herein), may be used to adjust camera focus over time in order to account for changing context. It may be undesirable to change focus too abruptly, thus such changes may be configured to occur over time, e.g., via a smoothing technique.

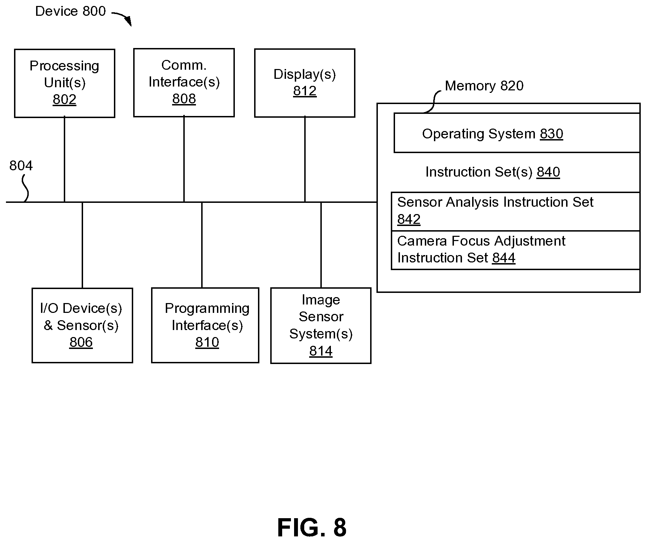

**Figure 8** is a block diagram of an example device 800. Device 800 illustrates an exemplary device configuration for device 110 of Figure 1. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 800 includes one or more processing units 802 (e.g., microprocessors, ASICs, FPGAs, GPUs, CPUs, processing cores, and/or the like), one or more input/output (I/O) devices and sensors 806, one or more communication interfaces 808 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 810, one or more displays 812, one or more interior and/or exterior facing image sensor systems 814, a memory 820, and one or more communication buses 804 for interconnecting these and various other components.

In some implementations, the one or more communication buses 804 include circuitry that interconnects and controls communications between system components. In some implementations, the one or more I/O devices and sensors 806 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more displays 812 are configured to present a view of a physical environment or a graphical environment to the user. In some implementations, the one or more displays 812 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 812 correspond to diffractive, reflective, polarized, holographic, etc. waveguide displays. In one example, the device 800 includes a single display. In another example, the device 800 includes a display for each eye of the user.

In some implementations, the one or more image sensor systems 814 are configured to obtain image data that corresponds to at least a portion of the physical environment 105. For example, the one or more image sensor systems 814 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 814 further include illumination sources that emit light, such as a flash. In various implementations, the one or more image sensor systems 814 further include an on-camera image signal processor (ISP) configured to execute a plurality of processing operations on the image data.

In some implementations, the device 800 includes an eye tracking system for detecting eye position and eye movements (e.g., eye gaze detection). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user. Moreover, the illumination source of the device 800 may emit NIR light to illuminate the eyes of the user and the NIR camera may capture images of the eyes of the user. In some implementations, images captured by the eye tracking system may be analyzed to detect position and movements of the eyes of the user, or to detect other information about the eyes such as pupil dilation or pupil diameter. Moreover, the point of gaze estimated from the eye tracking images may enable gaze-based interaction with content shown on the near-eye display of the device 800.

The memory 820 includes high-speed random-access memory, such as DRAM, SRAM, DDR RAM, or other random-access solid-state memory devices. In some implementations, the memory 820 includes non-volatile memory, such as one or more magnetic disk storage devices, optical disk storage devices, flash memory devices, or other non-volatile solid-state storage devices. The memory 820 optionally includes one or more storage devices remotely located from the one or more processing units 802. The memory 820 includes a non-transitory computer readable storage medium.

In some implementations, the memory 820 or the non-transitory computer readable storage medium of the memory 820 stores an optional operating system 830 and one or more instruction set(s) 840. The operating system 830 includes procedures for handling various basic system services and for performing hardware dependent tasks. In some implementations, the instruction set(s) 840 include executable software defined by binary information stored in the form of electrical charge. In some implementations, the instruction set(s) 840 are software that is executable by the one or more processing units 802 to carry out one or more of the techniques described herein.

The instruction set(s) 840 includes a sensor analysis instruction set 842 and a camera focus adjustment instruction set 844. The instruction set(s) 840 may be embodied as a single software executable or multiple software executables.

The sensor analysis instruction set 842 is executable by the processing unit(s) 802 to obtain sensor data from the one or more sensors (e.g., light intensity data, depth data, motion data, etc.), obtain content data from a device, and determine sensor analysis information for the device using one or more of the techniques disclosed herein. To these ends, in various implementations, the instruction includes instructions and/or logic therefor, and heuristics and metadata therefor.

In some implementations, the camera focus adjustment instruction set 844 is executable by the processing unit(s) 802 to provides a process for adjusting focus of an outward-facing camera (e.g., camera(s) for a head mounted system) based on what an eye is attending to (e.g., focus/vergence) using one or more of the techniques discussed herein (e.g., an open-loop process, a closed-loop process, etc.) or as otherwise may be appropriate. To these ends, in various implementations, the instruction includes instructions and/or logic therefor, and heuristics and metadata therefor.

Although the instruction set(s) 840 are shown as residing on a single device, it should be understood that in other implementations, any combination of the elements may be located in separate computing devices. Moreover, Figure 8 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

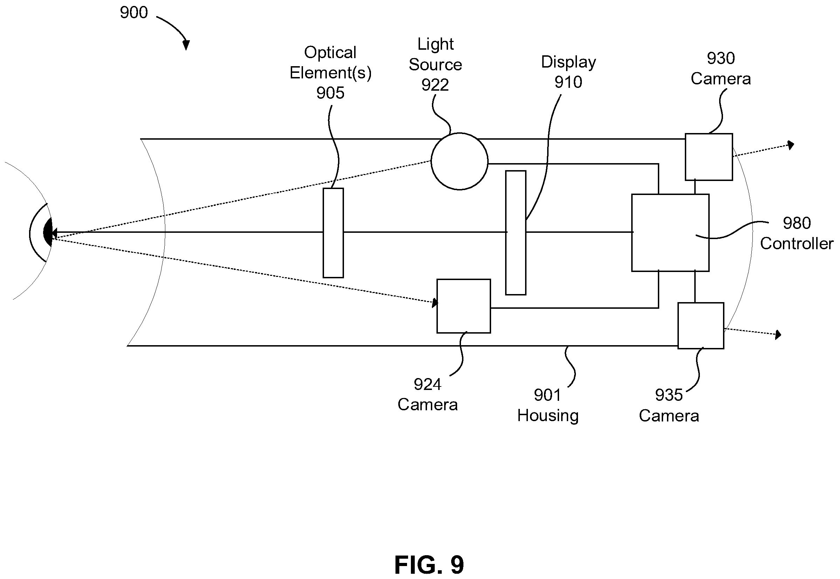

**Figure 9** illustrates a block diagram of an exemplary HMD 900 in accordance with some implementations. The HMD 900 includes a housing 901 (or enclosure) that houses various components of the HMD 900. The housing 901 includes (or is coupled to) an eye pad (not shown) disposed at a proximal (to the user 102) end of the housing 901. In various implementations, the eye pad is a plastic or rubber piece that comfortably and snugly keeps the HMD 900 in the proper position on the face of the user 102 (e.g., surrounding the eye 45 of the user 102).

The housing 901 houses a display 910 that displays an image, emitting light towards or onto the pupil 50 of the eye 45 of a user 102. In various implementations, the display 910 emits the light through an eyepiece having one or more lenses 905 that refracts the light emitted by the display 910, making the display appear to the user 102 to be at a virtual distance farther than the actual distance from the eye to the display 910. For the user 102 to be able to focus on the display 910, in various implementations, the virtual distance is at least greater than a minimum focal distance of the eye (e.g., 7 cm). Further, in order to provide a better user experience, in various implementations, the virtual distance is greater than 1 meter.

The housing 901 also houses a tracking system including one or more light sources 922, camera 924, camera 930, camera 935, and a controller 990. The one or more light sources 922 emit light onto the eye of the user 102 that reflects as a light pattern (e.g., a circle of glints) that can be detected by the camera 924. Based on the light pattern, the controller 990 can determine an eye tracking characteristic of the user 102. For example, the controller 980 can determine a gaze direction and/or a blinking state (eyes open or eyes closed) of the user 102. As another example, the controller 980 can determine a pupil center, a pupil size, or a point of regard with respect to the pupil 50 of the eye 45. Thus, in various implementations, the light is emitted by the one or more light sources 922, reflects off the eye of the user 102, and is detected by the camera 924. In various implementations, the light from the eye of the user 102 is reflected off a hot mirror or passed through an eyepiece before reaching the camera 924.

The display 910 emits light in a first wavelength range and the one or more light sources 922 emit light in a second wavelength range. Similarly, the camera 924 detects light in the second wavelength range. In various implementations, the first wavelength range is a visible wavelength range (e.g., a wavelength range within the visible spectrum of approximately 400-700 nm) and the second wavelength range is a near-infrared wavelength range (e.g., a wavelength range within the near-infrared spectrum of approximately 700-1400 nm).

In various implementations, eye tracking (or, in particular, a determined gaze direction) is used to enable user interaction (e.g., the user 102 selects an option on the display 910 by looking at it), provide foveated rendering (e.g., present a higher resolution in an area of the display 910 the user 102 is looking at and a lower resolution elsewhere on the display 910), or correct distortions (e.g., for images to be provided on the display 910).

In various implementations, the one or more light sources 922 emit light towards the eye of the user 102 which reflects in the form of a plurality of glints.

In various implementations, the camera 924 is a frame/shutter-based camera that, at a particular point in time or multiple points in time at a frame rate, generates an image of the eye of the user 102. Each image includes a matrix of pixel values corresponding to pixels of the image which correspond to locations of a matrix of light sensors of the camera. In implementations, each image is used to measure or track pupil dilation by measuring a change of the pixel intensities associated with one or both of a user's pupils.

In various implementations, the camera 924 is an event camera including a plurality of light sensors (e.g., a matrix of light sensors) at a plurality of respective locations that, in response to a particular light sensor detecting a change in intensity of light, generates an event message indicating a particular location of the particular light sensor.

In various implementations, HMD 900 includes externally facing sensors (e.g., camera 930 and camera 935) for capturing information from outside of the HMD 900. For example, to capture image data of the physical environment that the user 102 is viewing. The image data can include light intensity image data and/or depth data. For example, camera 930 (e.g., sensor 122 of Figure 1) may be a video camera for capturing RGB data, and camera 935 (e.g., sensor 124 of Figure 1) may be a depth sensor (e.g., a structured light, a time-of-flight, or the like) for capturing depth data.

Those of ordinary skill in the art will appreciate that well-known systems, methods, components, devices, and circuits have not been described in exhaustive detail so as not to obscure more pertinent aspects of the example implementations described herein. Moreover, other effective aspects and/or variants do not include all of the specific details described herein. Thus, several details are described in order to provide a thorough understanding of the example aspects as shown in the drawings. Moreover, the drawings merely show some example embodiments of the present disclosure and are therefore not to be considered limiting.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or additionally, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel. The operations described in this specification can be implemented as operations performed by a data processing apparatus on data stored on one or more computer-readable storage devices or received from other sources.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at an electronic device having a processor, a display, and one or more sensors:
obtaining a plurality of sensor-based distance signals based on sensor data from a plurality of sensors, the plurality of sensors comprising one or more eye sensors and one or more environment sensors;
determining a fusion characteristic based on the sensor data;
determining a focus adjustment of at least one of the one or more sensors based on fusing the sensor-based distance signals using the fusion characteristic; and
adjusting a focus of the at least one of the one or more sensors based on the focus adjustment.

2. The method of claim 1, wherein determining the fusion characteristic is based on confidence associated with the sensor-based distance signals.

3. The method of any of claims 1-2, wherein determining the fusion characteristic comprises:
determining a context based on the sensor data;
determining confidence associated with the sensor-based distance signals based on the context; and
determining the fusion characteristic based on the confidence associated with the sensor-based distance signals.

4. The method of any of claims 1-3, wherein determining the fusion characteristic comprises:
determining a vergence distance based on the sensor data based on an intersection of gaze directions;
determining confidence associated with the sensor-based distance signals based on the vergence distance; and
determining the fusion characteristic based on the confidence associated with the sensor-based distance signals.

5. The method of claim 1, wherein determining the fusion characteristic comprises:
determining an operational mode; and
determining the fusion characteristic based on the operational mode.

6. The method of claim 5, wherein the operational mode is selected from a plurality of operational modes comprising at least two of:
a nominal mode;
a passthrough video mode;
a virtual reality (VR) mode;
spatial photo capture mode;
a spatial video capture mode;
a persona enrollment or avatar enrollment mode;
an APE calibration mode;
an in-field calibration mode;
an object capture mode configured to generate a model of an object; and
a fallback mode.

7. The method of any of claims 5 or 6, wherein the determined operational model is a nominal mode and the fusion characteristic produces the focus adjustment using only a vergence-based distance signal.

8. The method of any of claims 5 or 6, wherein the determined operational model is a VR mode and the fusion characteristic produces the focus adjustment using a fixed focus.

9. The method of any of claims 5 or 6, wherein the determined operational model is a spatial photo capture mode and the fusion characteristic produces the focus adjustment using bracketed focus stacking.

10. The method of any of claims 5 or 6, wherein the determined operational model is a persona enrollment avatar enrollment mode in which the device is held out in front of a face of the user and the fusion characteristic produces the focus adjustment based on detecting the face of the user and determining a distance of the face of the user from the electronic device.

11. The method of any of claims 5 or 6, wherein the determined operational model is an object capture mode and the fusion characteristic produces the focus adjustment by identifying a target object and determining a distance of the target object from the electronic device.

12. The method of any of claims 5 or 6, wherein the determined operational model is a fallback mode and the fusion characteristic produces the focus adjustment based on determining signal loss characteristics of the plurality of sensor-based distance signals.

13. The method of any one of claims 1-12, wherein the fusion characteristic produces the focus adjustment based on combining:
a vergence-based distance signal corresponding to a distance at which gaze directions intersect; and
a point-of-regard-based distance signal corresponding to one or more distances at which one or more rays associated with a gaze direction intersect one or more environment objects.

14. A device comprising:
one or more sensors;
a display;
a non-transitory computer-readable storage medium; and
one or more processors coupled to the non-transitory computer-readable storage medium, wherein the non-transitory computer-readable storage medium comprises program instructions that, when executed on the one or more processors, cause the one or more processors to perform operations comprising an one of the methods of claims 1-13.

15. A non-transitory computer-readable storage medium, storing program instructions executable via a processor to perform operations comprising any one of the methods of claims 1-13.
